# EUROPEAN PATENT APPLICATION

(11) **EP 1 053 891 A1**
(43) Date of publication of application: **22.11.2000**
(21) Application number: 99201599.0
(22) Date of filing: 20.05.1999
(51) Int. Cl.: B44F 1/02, G02B 5/08

(54) **Mirror assembly for outdoor use**

(71) Applicant: Deknudt, Francis Constant Alois Maria, 8540 Deerlijk (BE)
(72) Inventor: Deknudt, Francis Constant Alois Maria, 8540 Deerlijk (BE)
(74) Representative: Leherte, Georges M.L.M., Dr.

(57) **Abstract**

A mirror assembly for outdoor use, comprising at least two mirroring panels (6-9) having different orientations, such that each panel (6-9) reflects a different image or sight of the outdoor environment, in order to create a decorative effect by the combination of said reflected images or sights, or comprising a single mirroring panel and at least one panel showing a decorative image or pattern, for creating a decorative effect by the combination of said decorative image or pattern and the image or sight of the environment reflected by the mirroring panel.

The outdoor use, in particular in a garden or park, of such a mirror assembly.

## Description

This invention relates to a mirror assembly for outdoor use and to a particular use for decorative purposes of such an assembly.

Mirrors are mostly used for making objects or views visible to an observer in front of the mirror, in order to give that observer information about that object or view. Mirrors are also used indoors for creating light reflection effects, or to create a space-enlarging effect.

Known outdoor mirrors are for example exterior rearview mirrors for vehicles or solar radiation reflectors. The use of mirrors for decoration purposes has always been limited to indoor applications.

In gardens or parks, decorative effects are generally obtained by flowers, bushes, trees or other plantings. Although these "decoration means" are available in a large number of varieties and colors, and their combination often results in magnificent gardens, it is rather difficult to create really surprising effects.

Furthermore, it is impossible to keep all plants in a decorative state for a long period of time, since most of them are easily damaged when weather conditions are not ideal. When laying out a garden or a park, one also has to take account of the fact that each plant variety requires typical growing conditions. Some plant varieties for example need as much direct sunlight as possible, while others can hardly stand any direct sunlight at all. So, there are various limitations to the possible combinations of plant varieties.

The planting and maintenance of plants is also laborious, and very time-consuming.

It is an object of this invention to provide further means for creating a decorative effect outdoors, in particular in gardens, parks or similar environments, which do not have the above-mentioned drawbacks.

This object has been achieved in, accordance with this invention, by the provision of a mirror assembly for outdoor use, comprising at least two mirroring panels having different orientations, such that each panel reflects a different image or sight of the outdoor environment, in order to create a decorative effect by the combination of said reflected images or sights.

The mirror assembly can be installed in any place to create a decorative effect by the combination of at least two different reflected views. The position and orientation of the mirror assembly can be determined such that the combination of reflected images is surprising, and/or such that at least one of the reflected images or sights is shown at a place, where it would not be expected to be seen. The mirror assembly can for example be installed against a garden fence such that one mirroring panel reflects the blue sky with passing clouds, while another panel reflects a group of flowers. The combination of sights as well as the place where this combination is shown is very surprising and creates a very special decorative effect in the garden.

The mirror assembly can further also create a space-enlarging effect in a garden or a park. It can also be used to reflect light (sunlight) towards a darker part of the environment, thereby unexpectedly creating a lighting effect.

Depending on the direction of observation of the mirror assembly, different reflected images will be observed on the mirroring panels. A further advantage of the invention is thus that, depending on the direction of observation, various decorative effects are obtained.

This mirror assembly according to the invention can be manufactured as a unit which is easy to install, and which requires very little maintenance.

Advantageously, the mirror assembly according to this invention further comprises at least one panel showing a decorative image or pattern.

Adding a decorative image or pattern to the combination of reflected images or sights increases the decorative effect obtained by the invention. Preferably, the decoative image or pattern is shown on a glass panel.

An alternative mirror assembly according to this invention, also achieving the above-identified advantages, comprises a single mirroring panel and at least one panel showing a decorative image or pattern, for creating a decorative effect by the combination of said decorative image or pattern and the image or sight of the environment reflected by the mirroring panel.

In a preferred embodiment of a mirror assembly according to this invention, the orientation of at least one mirroring panel is adjustable. By changing the orientation of the mirroring panel, a different image or sight can be shown and a new decorative effect is achieved.

Preferably at least one mirroring panel is rotatably supported by a base structure. It is then very easy to adjust the orientation of the mirroring panel.

In a further preferred embodiment, the mirror assembly comprises at least two mirroring panels, each panel being rotatable independently about a respective axis of rotation in order to adjust its orientation.

When the mirror assembly comprises at least two panels extending next to each other, it is also preferred that a slit is provided between the adjacent edges of these panels. This allows the wind to pass through and the mirror assembly thereby better resists wind pressure.

In a further preferred embodiment the mirroring panels are corrosion-resistant. Such a mirror assembly is a long-lasting weatherproof product.

When at least one mirroring panel has a mirroring surface on both sides, decorative effects can be created by both sides, or one side can be used to create a decorative effect, whereas the other side creates a lighting effect or a space-enlarging effect.

In another embodiment, the mirror assembly comprises a base structure supporting the panels, said base structure comprising a frame surrounding the panels, whereas the height and/or the orientation of the frame is/are adjustable.

This allows the simultaneous adjusting of the position and/or the orientation of all mirroring panels supported by the frame.

In a preferred embodiment in accordance with this invention, the mirror assembly is part of a fencing element, for example a wooden fencing element suitable for construction of a garden fence.

Another aspect of the present invention is the outdoor use, in particular in a garden or park, of a mirror assembly comprising at least two differently oriented mirroring panels, for creating a decorative effect by the combination of the different images or sights reflected by said mirroring panels, **or** of a mirror assembly comprising at least one mirroring panel and at least one other panel showing a decorative image or pattern, for creating a decorative effect by the combination of the image or sight reflected by said mirroring panel and the image or pattern shown by said other panel.

The following detailed description further illustrates the invention. This description is given by way of example and cannot be interpreted as limiting the scope of the patent protection determined by the appended claims. In this description, reference is made to the accompanying drawing,

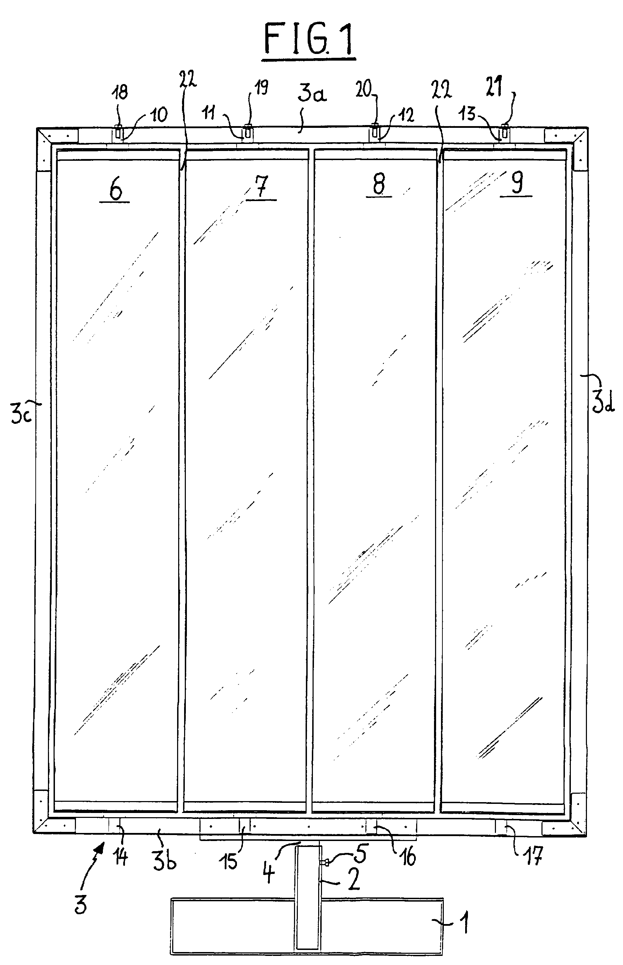

figure 1, which is a front elevational view of a preferred embodiment of the mirror assembly in accordance with this invention.

The mirror assembly illustrated on the annexed drawing comprises a rectangular base plate (1), on the top side of which a tubular member (2) is fixed. The tubular member extends in a generally vertical direction when the base plate (1) rests on a horizontal surface.

The mirror assembly further comprises a rectangular frame (3), composed by four elongate elements : a top element (3a), a bottom element (3b), and two side elements (3c), (3d).

A cilindrical pin member (4) extends outwardly from the bottom element (3c) according to the vertical axis of symmetry of the frame (3). The pin member (4) is inserted in the tubular member (2) of the base plate (1), such that the frame (3) is rotatably supported in a vertical position.

A bolt (5) extending through the wall of the tubular member (2) is screwed in a recess in the pin member (4) in order to keep the frame (3) at a fixed height. The bolt (5) also prevents rotation of the pin member (4) in the tubular member (2) and thus also serves to maintain the orientation of the frame (3). the height and orientation of the frame can be adjusted after unscrewing the bolt (5).

The pin member (4) comprises various recesses allowing to fix the frame (3) at different heights.

The frame rotatably supports four rectangular mirrors (6), (7), (8), (9) arranged side by side in the space between the frame elements (3a),(3b),(3c), (3d). The longitudinal axes of these mirrors (6-9) extend vertically.

Each mirror (6-9) has a cylindrical top shaft (10), (11), (12), (13) and a cylindrical bottom shaft (14), (15), (16), (17) extending according to the longitudinal axis of the mirror. The top shafts (10-13) are rotatably retained in respective recesses in the top element (3a) of the frame (3). The bottom shafts (14-17) are rotatably retained in respective recesses in the bottom element (3b) of the frame (3).

The top shafts (10-13) are secured in their respective recesses by bolts (18-21) extending through the top frame element (3a) and engaging these top shafts (10-13). The mirrors (6-9) are thus rotatable about their vertical axes of symmetrie. Preferably means are provided (not shown on the drawing) to retain the respective mirrors in a fixed orientation with respect to the frame (3).

The mirrors (6-9) are provided next to each other at a small distance apart from one another. The slits (22) between the adjacent vertical edges of the mirrors allow the wind to pass through.

This mirror assembly can be used as an outdoor decorative element for example in a garden or on a terrace or patio. The frame (3) orientation and height can be adjusted and the mirrors (6-9) can be rotated to any position to determine the different reflected images or sights shown by the four mirrors. Numerous combinations of images or sights can be made, thereby creating special decorative effects.

The mirror assembly can also be provided with at least one mirror (6), (7), (8), (9), having an axis of rotation extending in a horizontal direction or in any other direction.

## Claims

1. Mirror assembly for outdoor use, characterised in that it comprises at least two mirroring panels (6-9)having different orientations, such that each panel (6-9) reflects a different image or sight of the outdoor environment, in order to create a decorative effect by the combination of said reflected images or sights.

2. Mirror assembly according to claim 1 characterised in that it further comprises at least one panel showing a decorative image or pattern.

3. Mirror assembly for outdoor use, characterised in that it comprises a single mirroring panel and at least one panel showing a decorative image or pattern, for creating a decorative effect by the combination of said decorative image or pattern and the image or sight of the environment reflected by the mirroring panel.

4. Mirror assembly for outdoor use, according to any of the preceding claims, characterised in that the orientation of at least one mirroring panel (6-9) is adjustable.

5. Mirror assembly for outdoor use, as claimed in any of the preceding claims, characterised in that at least one mirroring panel (6-9) is rotatably supported by a base structure (1, 2, 3).

6. Mirror assembly for outdoor use according to any of the preceding claims, characterised in that it comprises at least two mirroring panels (6-9), each panel being rotatable independently about a respective axis of rotation in order to adjust its orientation.

7. Mirror assembly for outdoor use, according to any of the preceding claims, characterised in that it comprises at least two panels (6-9) extending next to each other, and that a slit (22) is provided between the adjacent edges of these panels (6-9).

8. Mirror assembly, according to any of the preceding claims, characterised in that the mirroring panels (6-9) are corrosion-resistant.

9. Mirror assembly, according to any of the preceding claims, characterised in that at least one mirroring panel (6-9) has a mirroring surface on both sides.

10. Mirror assembly, according to any of the preceding claims, characterised in that it comprises a base structure (1, 2, 3) supporting the panels, said base structure comprising a frame (3) surrounding the panels (6-9), and that the height and/or the orientation of the frame is/are adjustable.

11. Mirror assembly according to any of the preceding claims characterised in that it is part of a fencing element.

12. The outdoor use, in particular in a garden or park, of a mirror assembly comprising at least two differently oriented mirroring panels (6-9), for creating a decorative effect by the combination of the different images or sights reflected by said mirroring panels (6-9).

13. The outdoor use, in particular in a garden or park, of a mirror assembly comprising at least one mirroring panel and at least one other panel showing a decorative image or pattern, for creating a decorative effect by the combination of the image or sight reflected by said mirroring panel and the image or pattern shown by said other panel.
